# FASCICULE DE BREVET EUROPEEN

(11) **EP 1 283 135 B1**
(45) Date de publication et mention de la délivrance du brevet: **22.06.2005**
(21) Numéro de dépôt: 02291930.2
(22) Date de dépôt: 30.07.2002
(51) Int. Cl.: B60R 21/20

(54) **Ensemble de sac gonflable pour véhicule automobile**
Luftkissen für ein Kraftfahrzeug
Air bag for vehicle

(30) Priorité: 07.08.2001 FR 0110559
(43) Date de publication de la demande: 12.02.2003
(73) Titulaire: Faurecia Industries, 92000 Nanterre (FR)
(72) Inventeur: Galmiche, Etienne, 25460 Etupes (FR); Vannelli, Frédéric, 90120 Mezire (FR)
(74) Mandataire: Domenego, Bertrand

(56) Documents cités:
- EP-A- 1 028 033
- WO-A-00/05105
- FR-A- 2 781 442
- US-A- 5 536 043

## Description

L'invention concerne un ensemble d'équipement pour véhicule automobile tel que défini dans le préambule de la revendication 1 du type comportant un support de sac gonflable ; un sac gonflable fixé sur le support par des premiers moyens de fixation, le sac gonflable ayant une configuration de repos et une configuration déployée; une plaque de répartition d'effort de l'impact d'un passager sur le sac gonflable, cette plaque ayant une surface apparente formant une partie de la façade de l'équipement à l'état monté ; et des moyens de fixation frangibles qui fixent ladite plaque par rapport au support lorsque le sac gonflable est dans sa configuration de repos et qui sont rompus sous la force de déploiement du sac gonflable.

Elle s'applique notamment aux sacs gonflables pour la protection des genoux des passagers dans des véhicules automobiles

Un tel ensemble est connu du document US 5,536,043.

On connaît dans l'état de la technique, par exemple du document US-A-6,131,950 un ensemble de sac gonflable pour la retenue des genoux des passagers. Cet ensemble comprend un support de sac gonflable, un sac gonflable et une plaque de répartition d'effort.

Le sac gonflable comprend une extrémité ouverte qui est fixée sur le support et une extrémité fermée. L'extrémité fermée du sac gonflable est fixée le long du bord de la plaque de répartition d'effort et le sac gonflable s'applique contre la surface arrière de la plaque. A cet effet, un cadre en fil de fer et inséré dans le sac gonflable, cadre qui est adapté au contour du bord de la plaque. Le bord de la plaque de répartition d'effort est replié autour de ce cadre en sertissant le sac gonflable.

Ces ensembles sont difficiles à fabriquer en raison de nombreuses pièces et nécessitent une grande quantité de matière.

L'invention a pour but de pallier ces inconvénients et de proposer un équipement de véhicule automobile à sac gonflable avec un élément de répartition d'effort rigide qui soit peu coûteuse.

A cet effet, l'invention a pour objet un ensemble du type précité, caractérisé en ce qu'il comprend les caractéristiques de la revendication 1.

Selon des modes particuliers de réalisation, l'ensemble selon l'invention comporte l'une ou plusieurs des caractéristiques exposées dans les revendications 2 à 11.

L'invention sera mieux comprise à la lecture de la description qui va suivre, donnée uniquement à titre d'exemple et faite en se référant aux dessins annexés sur lesquels :
- la Figure 1 est une vue en coupe d'un vide-poches comprenant un ensemble selon l'invention.
- la Figure 1A est une vue du détail IA de la Figure 1 à plus grande échelle ;
- la Figure 1B est une vue du détail IB de la Figure 1 à plus grande échelle ;
- les Figures 2 à 4 sont des vues du vide-poches de la Figure 1 à différentes étapes du fonctionnement;
- la Figure 5 est une vue en coupe d'un détail d'un deuxième mode de réalisation de l'ensemble selon l'invention ;
- la Figure 6 est une vue schématique en perspective d'une partie du détail de la Figure 5 ; et
- les Figures 7 et 8 sont des vues de détails des troisième et quatrième modes de réalisation de l'ensemble selon l'invention.

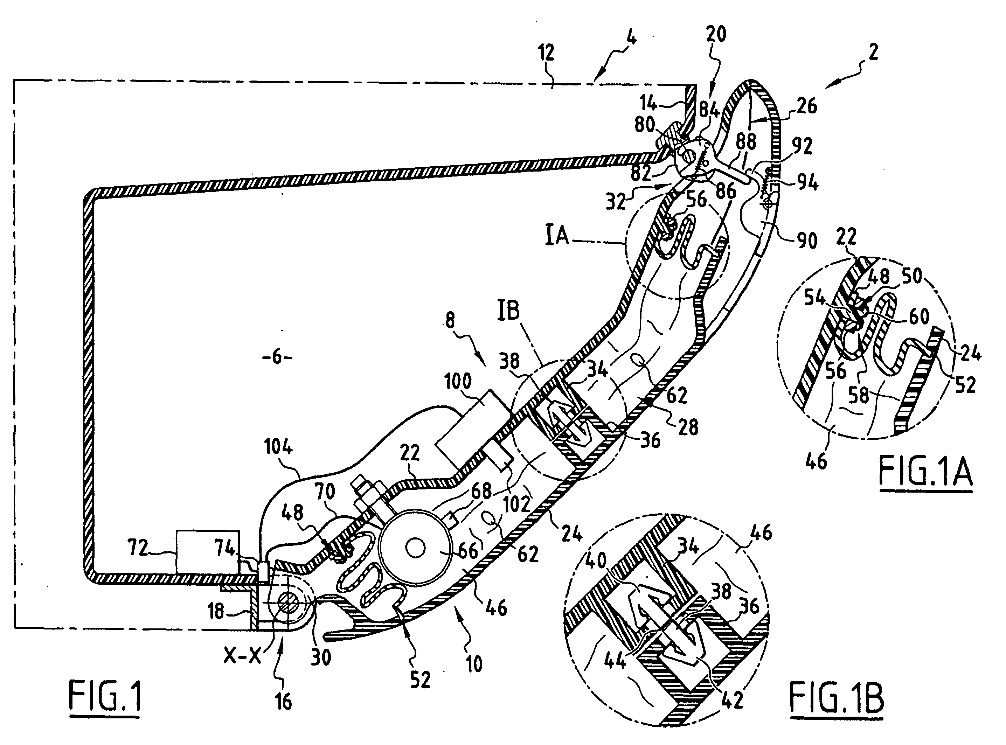

Sur la Figure 1, on a représenté un ensemble de vide-poches selon l'invention pour un véhicule automobile, cet ensemble étant désigné par la référence générale 2.

Dans ce qui suit, l'expression « avant » désignera le sens tourné vers le passager à l'état monté de l'ensemble, tandis que « arrière » désignera le sens opposé.

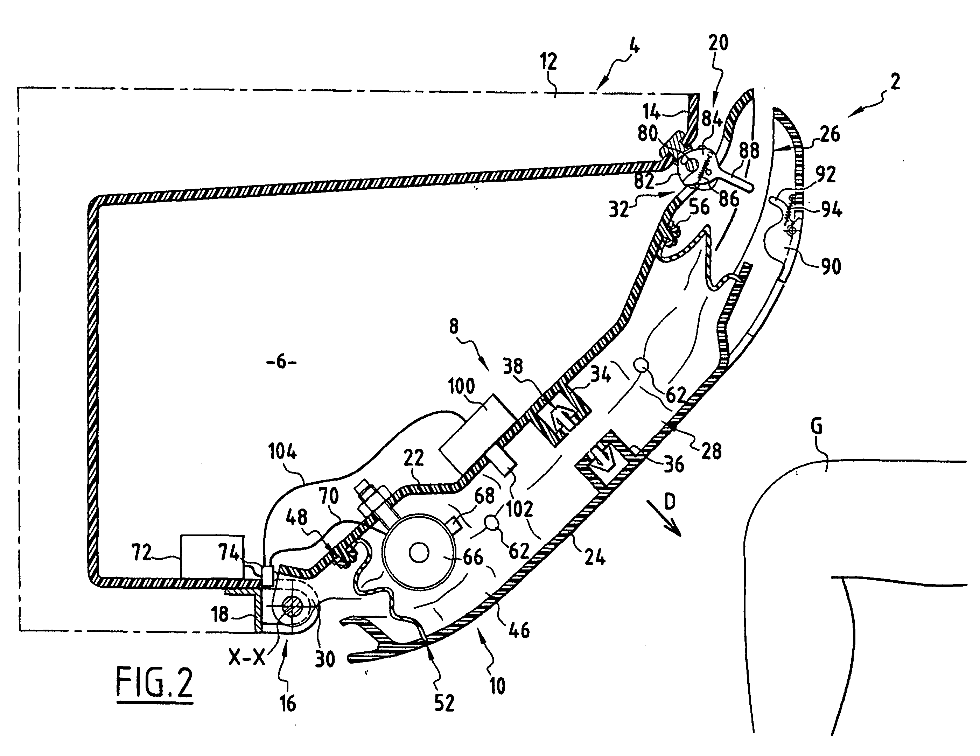

L'ensemble 2 comprend une planche de bord 4 délimitant un réceptacle vide-poches 6 ayant une ouverture 8 dirigée vers le passager. L'ensemble 2 comprend en outre une porte 10 qui recouvre l'ouverture 8 du réceptacle vide-poches 6. La porte 10 se trouve, dans sa position fermée, devant les genoux G d'un passager installé dans le véhicule (voir Figure 2).

La planche de bord 4 comprend un corps de base 12 formé par une couche 14 en matière plastique, de façon classique.

La porte 10 est articulée sur le bord inférieur de l'ouverture 8 autour d'un axe X-X horizontal par une charnière 16 entre une position de fermeture, comme représenté, et une position d'ouverture dans laquelle elle est basculée vers le bas suivant le sens horaire sur la Figure 1. La charnière 16 comprend une bride 18 d'articulation fixée sur la planche de bord 4.

La porte 10 est verrouillable dans sa position de fermeture par un dispositif de verrouillage 20.

La porte 10 comprend une doublure arrière 22 formant support, et une façade avant 24. Ces deux pièces 22, 24 forment entre eux un espace de logement 26 qui comprend une chambre d'expansion 28 formant sac gonflable. Comme on le verra ci-après, la façade 24 forme élément de répartition d'effort.

La doublure arrière 22 est une plaque, par exemple en matière thermoplastique. Le cas échéant, elle peut être revêtue sur sa surface arrière d'une feuille de décor. La doublure 22 recouvre, à l'état fermé de la porte, la totalité de l'ouverture 8 du réceptacle vide-poches 6. La doublure 22 comporte sur sa partie inférieure une bride d'articulation 30 faisant partie de la charnière 16.

Une ouverture 32 est ménagée dans la partie supérieure de la doublure 22 pour le dispositif de verrouillage 20.

Des embouts de fixation 34 (dont un est visible sur les Figures) font saillie sur la surface avant de la doublure 22. Les embouts 34 sont de préférence venus de matière avec la doublure 22, mais peuvent également être rapportés sur la doublure 22, par exemple par soudage.

La façade avant 24 est fabriquée de préférence à partir d'une matière plastique rigide comme par exemple le polypropylène, éventuellement assoupli par des additifs comme de l'EPDM. En variante, elle peut être recouverte d'une peau en matière plastique souple comme du PVC.

La façade 24 s'étend sensiblement sur toute la surface de la doublure 22 et est fixée sur celle-ci de façon libérale. Comme on le verra ci-après, la façade 24 peut être déployée suivant un sens de déploiement D. La façade 24 s'étend sur la partie centrale de la porte 10 à distance de la doublure 22, sensiblement parallèlement à celle-ci en formant le logement 26.

Sur la Figure 1B, on voit plus en détail la fixation de la façade 24 sur la doublure 22. Il est à noter qu'il existe plusieurs emplacements de fixation répartis sur la surface de la porte 10, dont uniquement un est représenté sur les Figures à titre d'exemple.

La façade 24 comporte des embouts de fixation 36 faisant saillie vers l'arrière à des emplacements correspondants aux emplacements des embouts 34 de la doublure 22. Ces embouts 36 sont, de préférence, venus de matière avec la façade 24. En variante, ils peuvent également être rapportés sur la façade, par exemple par soudage.

Les embouts 34, 36 correspondants se trouvent en vis-à-vis, à l'état assemblé de la porte 10. La façade 24 est fixée sur la doublure 22 aux emplacements des embouts 34, 36 par des éléments d'encliquetage frangibles 38. Ces éléments frangibles 38 sont constitués de deux têtes d'encliquetage 40, 42 liées par une zone à section affaiblie 44.

Par ailleurs, la doublure 22 et la façade 24 sont munies d'embouts (non représentés) formant entretoise entre la doublure 22 et la façade 24.

En se référant de nouveau à la Figure 1, on voit que la façade 24 et la doublure 22 sont en outre liées l'une à l'autre par une gaine 46.

La gaine 46 comporte une section transversale fermée, vue dans un plan perpendiculaire au sens de déploiement D. La gaine 46 est fabriquée en une matière élastique, par exemple en élastomère. De préférence, elle a une section transversale sensiblement constante dans un état non déformé. Elle peut être ainsi fabriquée par extrusion. En variante, elle est fabriquée par injection de matière plastique ou par tissage, par exemple un tissu comprenant un mélange de fils en polyamide et de fils en élastomère. Elle comporte à son extrémité, tournée vers la doublure 22, un premier bord 48 qui a un contour fermé et qui est muni de trous de fixation 50 (voir Figure 1A). A son extrémité tournée vers la façade 24, la gaine 46 comporte un second bord 52 à contour fermé.

La gaine 46 est fixée le long de son premier bord 48 sur la doublure 22. A cet effet, la doublure 22 comprend une pluralité d'embouts de fixation 54 venus de matière avec elle. Les embouts 54 peuvent être des pièces rapportées, par exemple par soudage. Les embouts 54 font saillie sur la surface avant de la doublure 22 et sont répartis sur un contour de fixation qui enferme une grande partie de la surface avant de la doublure 22 . Le premier bord 48 de la gaine 46 est enfiché par ses trous de fixation 50 sur les embouts 54. Des baguettes 56, ayant une forme correspondante au contour de fixation et comprenant des ouvertures 58 qui correspondent aux embouts 54, sont enfichées sur ces derniers. Elles s'appliquent contre le premier bord 48.

Les baguettes 56 sont serrées contre le premier bord 48 par une partie plastiquement déformée des embouts 50, qui forme tête de rivet 60.

Le second bord 52 est noyé dans la matière plastique de la façade 24, la façade 24 étant par exemple surmoulée sur le second bord 52.

Par ailleurs, des ouvertures 62 d'échappement de gaz sont ménagées dans la gaine 46. Ces ouvertures 62 permettent une évacuation du gaz de la gaine 46 après le déclenchement.

Le volume interne de la chambre d'expansion 28 est délimité par la surface interne de la gaine 46, et les parties des surfaces de la doublure 22 et de la façade 24 qui sont entourées parles bords 48, 52 de la gaine 46.

Un générateur de gaz 66 est disposé dans une région de bord de la doublure 22, à savoir dans la partie inférieure de la porte 10 entre la doublure 22 et la façade 24. Il est fixé sur la doublure 22 et ses ouvertures de sortie, dont une ouverture 68 est représentée, débouchent dans la chambre d'expansion 28. Le sens de sortie du gaz est orienté suivant le sens de la doublure 22 et de la façade 24, vers le centre de la chambre d'expansion 28. Le générateur de gaz 66 est connecté par une ligne de commande 70 à un capteur de décélération 72 via un interrupteur 74. Le capteur 72 est monté sur la planche de bord 4, à l'intérieur du réceptacle 6. Bien entendu, le capteur peut être monté à d'autres emplacements de la structure du véhicule.

L'interrupteur 74 est disposé sur la planche de bord 4, en l'occurrence à un emplacement proche de l'articulation 16 de la porte 10. Dans la position fermée de la porte 10, l'interrupteur 74 établit un contact entre le capteur 72 et le générateur de gaz 66 permettant un déclenchement de ce dernier.

Dans la position ouverte de la porte 10, l'interrupteur 74 est ouvert et empêche le déclenchement du générateur de gaz 66.

Le dispositif de verrouillage 20 comprend trois éléments :
Premièrement, il comprend une barre ou une gâche de verrouillage 80 fixée sur le bord supérieur de l'ouverture 8.
Deuxièmement, il comprend un premier 82 et un deuxième 84 crochets de verrouillage disposés dans l'ouverture 32 de la doublure 22 et articulés sur celle-ci. Les deux crochets 82, 84 sont reliés l'un à l'autre par un ressort 86. Ces deux crochets 82, 84 peuvent être actionnés par un levier 88 solidaire du second crochet 84.
Troisièmement, le dispositif de verrouillage 20 comprend une poignée de commande 90 articulée sur la façade 24. Un nez d'actionnement 92 fait saillie sur la surface arrière de la poignée 90 et s'applique contre le levier 88.

La poignée 90 est libre en translation par rapport au levier 88 dans le sens de déploiement D de la façade (voir ci-après). Cette dissociation de la poignée 90 des crochets 82, 84 permet d'utiliser sensiblement toute la façade avant 24 en tant qu'élément de répartition d'effort. Un ressort de rappel 94 sollicite la poignée 90 vers sa position de repos.

L'ensemble comporte de façon supplémentaire un dispositif auxiliaire 100 d'amortissement d'un second choc. Ce dispositif auxiliaire 100 est disposé sur la face arrière de la doublure 22. Il comprend par exemple un générateur de mousse. Le dispositif 100 est relié par une pluralité de conduites 102, dont une est représentée, à la chambre d'expansion 28 et par une ligne de commande 104 au capteur de décélération 72 par l'intermédiaire de l'interrupteur 74.

L'ensemble selon l'invention fonctionne de la façon suivante :

On part de la position de la porte 10 montrée sur la Figure 1, c'est-à-dire la porte 10 étant fermée et la chambre d'expansion 28 étant dans sa position de repos. Le contact entre le capteur 72 et le générateur de gaz 66 est établi par l'interrupteur 74.

Lorsque le capteur de décélération 72 constate une décélération importante, par exemple lors d'un accident, il déclenche le générateur de gaz 66, ainsi que le dispositif d'amortissement auxiliaire 100. Le dispositif 100 commence alors à générer de la mousse, ce qui se déroule moins rapidement que la génération de gaz. Dans un premier temps le gaz du générateur 66 emplit l'espace de la chambre d'expansion 28, jusqu'à ce que la pression sur la façade 24 devienne trop importante et que la force de rupture des éléments frangibles 38 soit dépassée. Les éléments frangibles 38 se rompent et la façade 24 se déplace sensiblement vers l'avant et vers le bas suivant la flèche D sur la Figure 2 sous l'effet de la force de pression du gaz. Les crochets de verrouillage 82, 84 restent dans leur position de blocage, de sorte que la doublure 22 reste immobile, tandis que la poignée de commande 90 se déplace d'un seul bloc avec la façade 24.

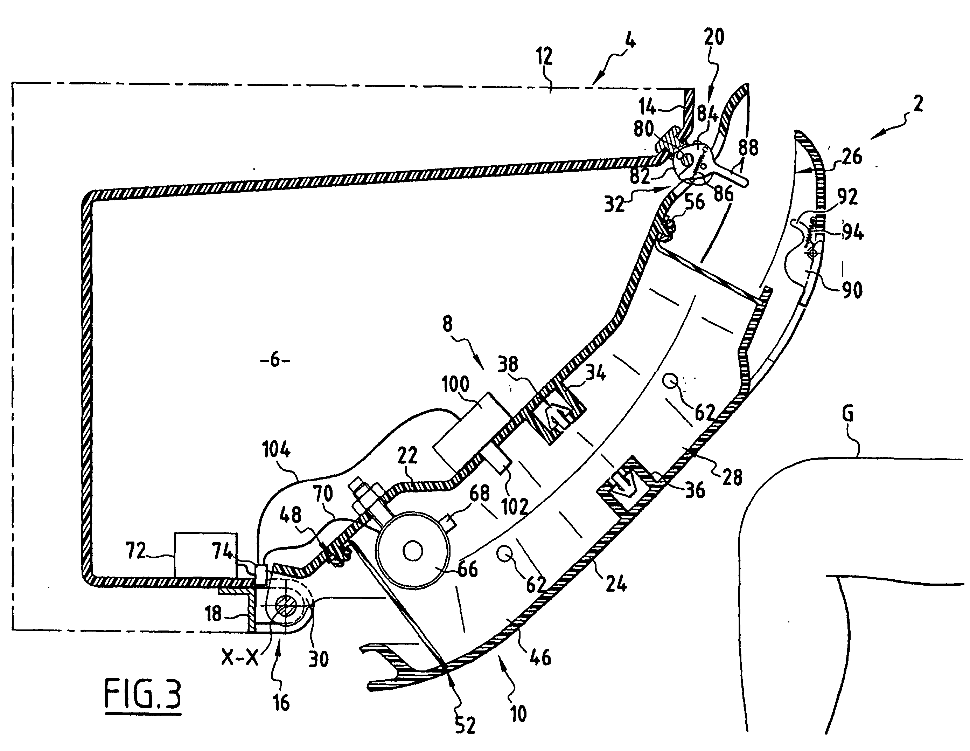

La façade 24 se déplace avec une vitesse importante jusqu'à ce que la gaine 46 soit complètement dépliée. Puis la gaine 46 se tend élastiquement, freine la façade 24 progressivement et retient celle-ci dans sa position de déploiement (Figure 3). Le pic de force qui agît sur les liaisons de la gaine 46 avec la doublure 22 et la façade 24 est en conséquence faible. Il est à noter que l'inclinaison de la façade 24 dans sa position déployée peut être déterminée à une valeur choisie en découpant la gaine 46 dans une pièce tubulaire extrudée avec une inclinaison voulue de la coupe. Il n'est donc pas nécessaire de prévoir des sangles de retenue de la façade 24 par rapport à la doublure 22, pour régler cette inclinaison.

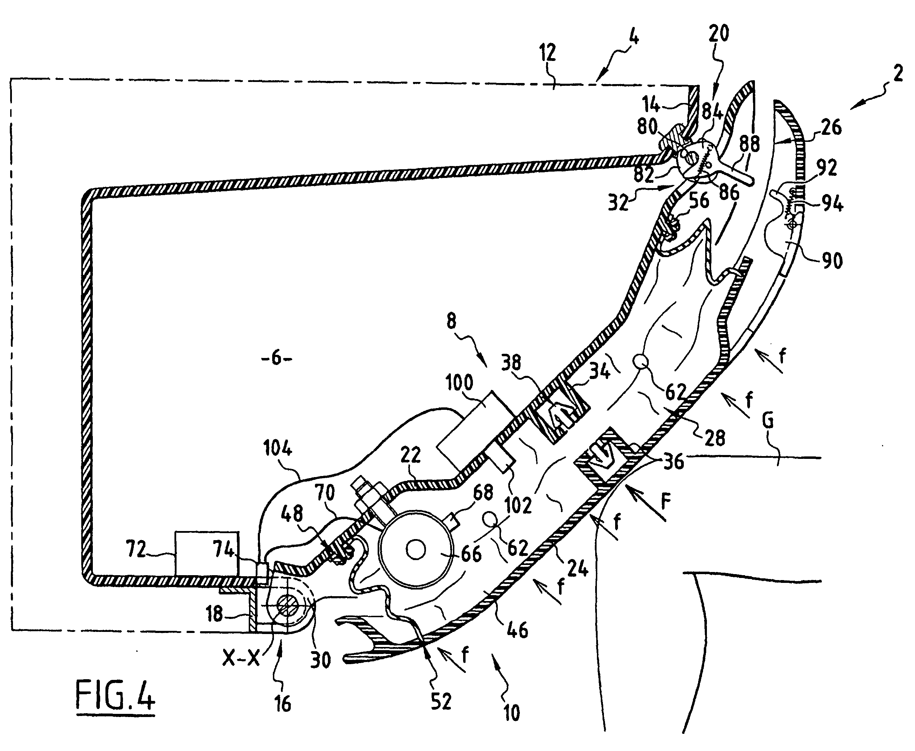

Enfin, les genoux G du passager percutent la façade 24 (Figure 4). La façade 24 répartit l'effort F des genoux G sur sensiblement toute la surface avant (flèches f) de la chambre d'expansion 28 et évite un rétrécissement local de celle-ci. Une pénétration immédiate des genoux G à travers la chambre 28 est empêchée. Le fait que la façade 24 soit rigide contribue à une bonne répartition des forces.

La pression du gaz dans la chambre d'expansion 28 revient rapidement à la pression atmosphérique. Pendant ce temps, le dispositif 100 continue à générer de la mousse. Lorsque le dispositif d'amortissement 100 auxiliaire a fini la génération de mousse (par exemple entre 2 à 10 secondes après le déclenchement de ce dispositif 100), la mousse emplit une partie de la chambre d'expansion 28. Cette partie correspond à environ 20% à 80% du volume maximal de la chambre. En conséquence, lors d'un second choc, les genoux du passager G sont de nouveau protégés.

Lorsque l'utilisateur ouvre la porte 10 et la bascule hors de sa position de fermeture, l'interrupteur 74 coupe les lignes de commande 70 et 104. Un déclenchement du générateur de gaz 66 et du dispositif auxiliaire 100 dans cette position et un danger de blessure du passager par déploiement de la façade 24 sont empêchés.

La porte 10 selon l'invention utilise peu de matière, grâce au fait que la façade 24 forme élément de répartition d'effort et forme une partie intégrante de la chambre d'expansion 28. En conséquence, le coût de fabrication de l'ensemble est faible. De plus, grâce à l'élasticité de la gaine 46, la fixation des bords de la gaine 46 est soumise à une force d'arrêt faible, ce qui augmente la sécurité de l'ensemble.

Le fait que la façade 24 est dépourvue de parties pouvant s'ouvrir pour permettre le passage du sac gonflable lors de son déploiement, permet de réaliser la façade de manière plus simple et d'utiliser un matériau à faible coût pour sa réalisation.

La porte 10 selon l'invention peut être fabriquée sans éléments métalliques et notamment entièrement en matière plastique. Le risque de blessure du passager est en conséquence faible.

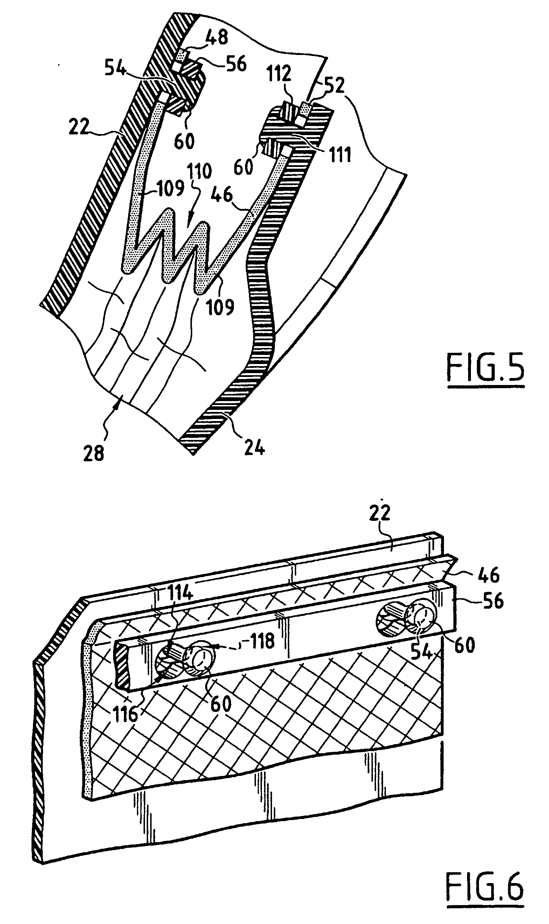

Sur les Figures 5 et 6, on a représenté des détails d'un deuxième mode de réalisation d'un ensemble selon l'invention.

Dans ce qui suit uniquement les différences par rapport au premier mode de réalisation seront expliquées. Les éléments analogues portent des références identiques.

La gaine 46 est fabriquée en une matière tressée ou tissée. Cette gaine 46 comporte des parties lisses 109 et une partie en forme de soufflet 110. Cette partie 110 de soufflet amortit l'effort d'arrêt de la façade 24 lors du déploiement. La façade 24 comprend des embouts 111 analogues aux embouts 54 de la doublure 22.

La gaine 46 est fixée sur la façade 24 et sur la doublure 22 par l'intermédiaire d'une baguette 56, 112 comprenant des ajours 114 en forme d'entrée de serrure. Les ajours 114 comprennent une partie élargie 116 ayant le diamètre des têtes 60 des embouts. Cette partie 116 permet un enfichage de la baguette 56, 112 sur les têtes 60 des embouts. Chaque ajour 114 comprend par ailleurs une partie étroite 118 de retenue.

Après l'enfichage sur les embouts 54, 111, la baguette respective 56, 112 est déplacée de telle sorte que les parties étroites 118 soient alignées avec les embouts 54, 111. La baguette 56, 112 est serrée contre le bord 48, 52 de la gaine par les têtes 60 des embouts 54, 111.

Ce mode de réalisation permet un assemblage de la porte 10 sans outils.

De plus, lors du déploiement, la gaine 46 se déploie jusqu'à ce que ses parties lisses 109 soient tendues. Puis la partie en soufflet 110 freine progressivement la façade 24.

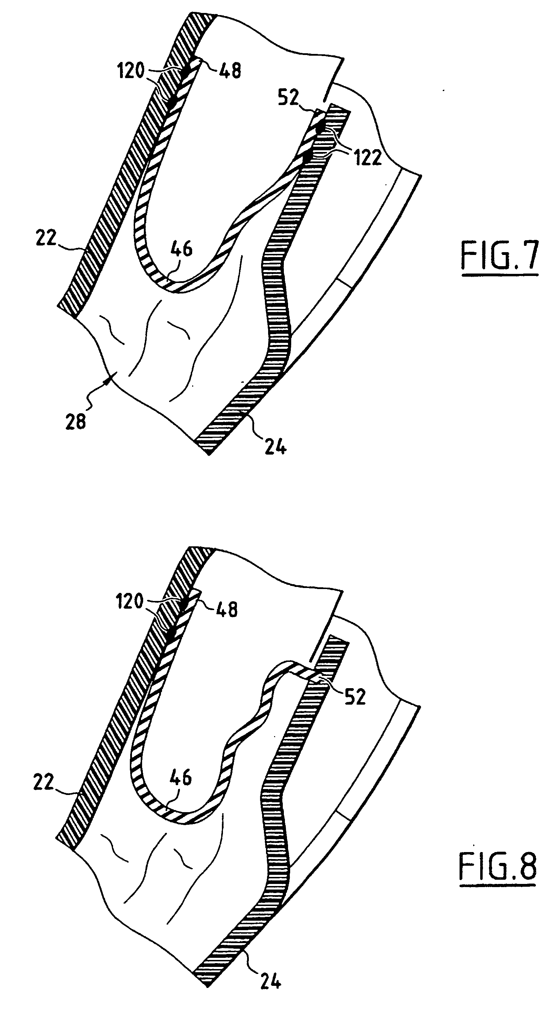

Sur les Figures 7 et 8 sont représentés un troisième et quatrième mode de réalisation.

La gaine 46 est en matière élastique, identique à celle de la gaine du premier mode de réalisation. La gaine 46 est fixée sur la doublure 22 et sur la façade 24 par solidarisation de matières.

Sur la Figure 7 chaque bord est fixée par deux lignes de soudure 120, 122.

Dans le cas de la Figure 8, la gaine 46 est liée à la façade 24 par surmoulage, comme dans le cas du premier mode de réalisation. Le bord 48 de la gaine 46 associé au support, est fixé par soudage.

Il est à noter que les moyens de fixation des premier 48 et second 52 bords de la gaine sont indépendants l'un de l'autre. Par exemple, la fixation de la gaine 46 sur la doublure peut être effectuée par surmoulage, tandis qu'elle est effectuée sur la façade par rivetage.

En variante, la gaine peut comporter des parties renforcées formant sangles de retenue et de guidage de la plaque. De préférence, elles sont venues de matière avec la gaine. Ces parties sont fixées, d'une part sur le support, et, d'autre part, sur la façade.

En variante encore, le dispositif d'amortissement auxiliaire 100 libère deux composants qui, une fois mutuellement en contact, s'expansent. Un exemple d'un tel mélange est le di-isocyanate et le polyol.

En variante, les embouts 34, 54 sont fabriqués séparément de la doublure 22 sur une pièce de renfort. Cette pièce comprend les embouts 34 à 54 à leurs positions relatives les uns par rapport aux autres correspondants aux positions ultérieures dans la porte 10. Ensuite, la doublure 22 est fixée sur cette pièce de renfort.

Bien entendu, le générateur de gaz 66 et le dispositif d'amortissement auxiliaire 100 peuvent être regroupés dans un seul module. Ce module comporte alors deux étages de déclenchement. En variante, le déclenchement du dispositif 100 peut-être décalé du déclenchement du générateur de gaz 66, par exemple de 1 à 2 secondes.

## Revendications

1. Ensemble d'équipement pour véhicule automobile, du type comportant :
- un support (22) de sac gonflable ;
- un sac gonflable (28) fixé sur le support (22) par des premiers moyens de fixation (54, 56 ; 120), le sac gonflable ayant une configuration de repos et une configuration déployée ;
- une plaque de répartition d'effort (24) de l'impact d'un passager sur le sac gonflable (28), cette plaque (24) ayant une surface apparente formant une partie de la façade de l'équipement à l'état monté ; et
- des moyens de fixation frangibles (38) qui fixent ladite plaque (24) par rapport au support (22) lorsque le sac gonflable (28) est dans sa configuration de repos et qui sont rompus sous la force de déploiement du sac gonflable (28),
**caractérisé en ce que** le sac gonflable (28) comprend la plaque de répartition d'effort (24) et une gaine (46) ayant une section transversale sensiblement fermée, **en ce que** la gaine (46) a une première extrémité (48) fixée sur le support (22) par lesdits premiers moyens de fixation (54, 56 ; 120) et une seconde extrémité (52), et **en ce que** la gaine (46) est fixée sur la plaque de répartition d'effort (24) le long de ladite seconde extrémité (52) par des seconds moyens de fixation (112, 60 ; 122), de telle sorte que le volume intérieur du sac gonflable (28) soit délimité dans sa partie voisine de la seconde extrémité (52) de la gaine (46) par la gaine (46) et par la plaque (24) de répartition d'effort solidaire de la gaine (46).

2. Ensemble selon la revendication 1, **caractérisé en ce que** lesdits premiers et/ou seconds moyens de fixation comprennent des moyens de sertissage (50, 54, 56 ; 111, 112, 114) de la gaine (46) contre ladite plaque (24) et/ou contre ledit support (22).

3. Ensemble selon la revendication 2, **caractérisé en ce que** les moyens de sertissage comprennent :
- des ouvertures (50 ; 114) ménagées dans ladite première (48) ou seconde (52) extrémité respective de la gaine (46) ;
- des ergots (54 ; 111) disposés sur la plaque (24) et/ou le support (22), et s'étendant à travers les ouvertures (50 ; 114) ; et
- des organes (60) coopérant avec les ergots (54 ; 111) et serrant l'extrémité (48, 52) respective de la gaine (46) contre la surface de la plaque (24) ou du support (22).

4. Ensemble selon l'une quelconque des revendications 1 à 3, **caractérisé en ce que** lesdits premiers et/ou seconds moyens de fixation comprennent une partie du support (22) et/ou de la plaque (24) moulée sur ladite première (48) ou seconde extrémité (52) respective de la gaine (46).

5. Ensemble selon l'une quelconque des revendications 1 à 4, **caractérisé en ce que** lesdits premiers et/ou seconds moyens de fixation comprennent ladite première (48) ou seconde (52) extrémité respective de la gaine (46) fixée au support (22) et/ou à la plaque (24) par soudage.

6. Ensemble selon l'une quelconque des revendications 1 à 5, **caractérisé en ce que** l'ensemble comporte des zones élastiques (46; 110) d'amortissement de la sollicitation de la plaque (24) lors du déploiement du sac gonflable (28).

7. Ensemble selon l'une quelconque des revendications 1 à 6, **caractérisé en ce que** la gaine (46) a une section transversale sensiblement constante à l'état déployé.

8. Ensemble selon l'une quelconque des revendications 1 à 7, **caractérisé en ce qu'**il comporte des moyens d'amortissement (100) de choc supplémentaire adaptés pour amortir un second impact du passager sur le sac gonflable (28).

9. Ensemble selon l'une des revendications 1 à 8, **caractérisé en ce qu'**il comprend en outre des moyens supplémentaires de retenue et de guidage de la plaque de répartition d'effort lors du déploiement du sac gonflable (28), et **en ce que** ces moyens comprennent des parties renforcées de la gaine, notamment fabriquées d'un seul tenant avec elle, ces parties s'étendant de ladite première extrémité (48) à ladite seconde extrémité (52) et étant fixées, d'une part, sur la plaque (24) et, d'autre part, sur le support (22).

10. Ensemble selon l'une quelconque des revendications 1 à 9, **caractérisé en ce que** le support est une doublure (22) d'une porte (10) destinée à être articulée sur un équipement de véhicule automobile, et la plaque (24) est au moins une partie de la surface visible de la porte (10).

11. Ensemble selon l'une quelconque des revendications précédentes, **caractérisé en ce qu'**il comprend des moyens de réglage de l'inclinaison de la plaque de répartition d'effort (24) et **en ce que** ces moyens de réglage sont formés par la gaine (46) qui est découpée dans une pièce tubulaire avec une inclinaison de la coupe.

## Patentansprüche

1. Kraftfahrzeug-Einrichtungsanordnung des Typs, welcher aufweist:
- einen Träger (22) von einem aufblasbaren Sack,
- einen aufblasbaren Sack (28), welcher an dem Träger (22) mittels erster Befestigungsmittel (54, 56; 120) befestigt ist, wobei der aufblasbare Sack eine Ruhe-Konfiguration und eine Entfaltungs-Konfiguration aufweist,
- eine Platte (24) zur Belastungsverteilung des Aufpralls eines Passagiers auf den aufblasbaren Sack (28), wobei diese Platte (24) eine zugehörige Fläche hat, welche einen Teil der Einrichtungs-Außenseite im Montagezustand ausbildet, und
- brechbare Befestigungsmittel (38), welche die Platte (24) bezüglich des Trägers (22) befestigen, wenn der aufblasbare Sack (28) in seiner Ruhe-Konfiguration ist, und welche mittels der Entfaltungskraft des aufblasbaren Sacks (28) gebrochen werden,
**dadurch gekennzeichnet, dass** der aufblasbare Sack (28) die Belastungsverteilungs-Platte (24) und eine Hülle (46) aufweist, welche einen im wesentlichen geschlossenen Querabschnitt hat, dass die Hülle (46) ein erstes Ende (48), welches an dem Träger (22) mittels der ersten Befestigungsmittel (54, 56; 120) befestigt ist, und ein zweites Ende (52) aufweist, und dass die Hülle (46) an der Belastungsverteilungs-Platte (24) längs des zweiten Endes (52) mittels der zweiten Befestigungsmittel (112, 60; 122) befestigt ist, derart dass das Innenvolumen des aufblasbaren Sacks (28) bei seinem Abschnitt benachbart zu dem zweiten Ende (52) der Hülle (46) von der Hülle (46) und von der Belastungsverteilungs-Platte (24) begrenzt wird, welche mit der Hülle (46) verbunden ist.

2. Anordnung gemäß Anspruch 1, **dadurch gekennzeichnet, dass** die ersten und/oder die zweiten Befestigungsmittel Mittel (50, 54, 56; 111, 112, 114) zur Quetschverbindung der Hülle (46) gegen die Platte (24) und/oder gegen den Träger (22) aufweisen.

3. Anordnung gemäß Anspruch 2, **dadurch gekennzeichnet, dass** die Quetschverbindungsmittel aufweisen:
- Öffnungen (50; 114), welche in dem jeweiligen ersten Ende (48) oder zweiten Ende (52) der Hülle (46) ausgespart sind,
- Zapfen (54; 111), welche an der Platte (24) und/oder an dem Träger (22) angeordnet sind und sich durch die Öffnungen (50; 114) hindurch erstrecken, und
- Bauteile (60), welche mit den Zapfen (54; 114) zusammenwirken und die jeweiligen Enden (48, 52) der Hülle (46) gegen die Fläche der Platte (24) oder des Trägers (22) anpressen.

4. Anordnung gemäß einem der Ansprüche 1 bis 3, **dadurch gekennzeichnet, dass** die ersten und/oder die zweiten Befestigungsmittel einen Abschnitt des Trägers (22) und/oder einen Abschnitt der Platte (24) aufweisen, welcher jeweils an das jeweilige erste Ende (48) oder zweite Ende (52) der Hülle (46) angeformt ist.

5. Anordnung gemäß einem der Ansprüche 1 bis 4, **dadurch gekennzeichnet, dass** die ersten und/oder zweiten Befestigungsmittel das jeweilige erste Ende (48) oder zweite Ende (52) der Hülle (46) aufweisen, welches an dem Träger (22) und/oder der Platte (24) mittels Schweißung befestigt ist.

6. Anordnung gemäß einem der Ansprüche 1 bis 5, **dadurch gekennzeichnet, dass** die Anordnung elastische Bereiche (46; 110) zur Dämpfung der Beanspruchung der Platte (24) bei der Entfaltung des aufblasbaren Sacks (28) aufweist.

7. Anordnung gemäß einem der Ansprüche 1 bis 6, **dadurch gekennzeichnet, dass** die Hülle (46) einen Querschnitt aufweist, welcher im Entfaltungszustand im wesentlichen konstant ist.

8. Anordnung gemäß einem der Ansprüche 1 bis 7, **dadurch gekennzeichnet, dass** sie zur Dämpfung eines zusätzlichen Stoßes Mittel (100) zum Dämpfen eines zweiten Aufpralls des Passagiers auf den aufblasbaren Sack (28) aufweist.

9. Anordnung gemäß einem der Ansprüche 1 bis 8, **dadurch gekennzeichnet, dass** sie außerdem zusätzliche Mittel zum Halten und zum Führen der Belastungsverteilungs-Platte bei der Entfaltung des aufblasbaren Sacks (28) aufweist, und dass diese Mittel verstärkte Abschnitte der Hülle aufweisen, welche insbesondere einstückig mit ihr hergestellt sind, wobei sich diese Abschnitte von dem ersten Ende (48) zu dem zweiten Ende (52) erstrecken und einerseits an der Platte (24) und andererseits an dem Träger (22) befestigt sind.

10. Anordnung gemäß einem der Ansprüche 1 bis 9, **dadurch gekennzeichnet, dass** der Träger eine Innenverkleidung (22) einer Tür (10) ist, welche zum gelenkigen Anbringen an einer Kraftfahrzeugeinrichtung vorgesehen ist, und die Platte (24) mindestens ein Abschnitt der sichtbaren Fläche der Tür (10) ist.

11. Anordnung gemäß einem der vorhergehenden Ansprüche, **dadurch gekennzeichnet, dass** sie Mittel zum Einstellen der Neigung der Belastungsverteilungs-Platte (24) aufweist und dass diese Einstellmittel von der Hülle (46) ausgebildet sind, welche in ein rohrförmiges Stück zugeschnitten ist mit einer Neigung des Schnitts.

## Claims

1. Equipment assembly for a motor vehicle, of the type comprising:
- an airbag support (22);
- an air bag (28) fixed on the support (22) by first fixing means (54, 56; 120), the airbag having a rest configuration and a deployed configuration;
- a plate (24) for distributing the force of the impact of a passenger on the airbag, this plate having a visible surface forming a part of the facade of the equipment in the installed state; and
- frangible fixing means (38) which fix the said plate (24) relative to the support (22) when the airbag (28) is in its rest configuration and which are broken under the force of deployment of the airbag (28),
**characterised in that** the airbag (28) comprises the force distribution plate (24) and a sheath (46) having a substantially closed cross-section, that the sheath (46) has a first end (48) fixed on the support (22) by the said first fixing means (54, 56; 120) and a second end (52), and that the sheath (46) is fixed on the force distribution plate (24) along the said second end (52) by second fixing means (112, 60; 122) in such a way that the internal volume of the airbag (28) is delimited in its part close to the second end (52) of the sheath (46) by the sheath (46) and by the force distribution plate (24) which is joined to the sheath (46).

2. Assembly as claimed in Claim 1, **characterised in that** the said first and/or second fixing means comprise clamping means (50, 54, 56; 111, 112, 114) for clamping the sheath (46) against the said plate (24) and/or against the said support (22).

3. Assembly as claimed in Claim 2, **characterised in that** the clamping means comprise:
- openings (50; 114) formed in the said respective first (48) or second (52) end of the sheath (46);
- studs (54; 111) disposed on the plate (24) and/or the support (22) and extending through the openings (50; 114); and
- members (60) which co-operate with the studs (54; 111) and clamping the respective end (48, 52) of the sheath (46) against the surface of the plate (24) or of the support (22).

4. Assembly as claimed in any one of Claims 1 to 3, **characterised in that** the said first and/or second fixing means comprise a part of the support (22) and/or of the plate (24) moulded onto the said respective first (48) or second end (52) of the sheath (46).

5. Assembly as claimed in any one of Claims 1 to 4, **characterised in that** the said first and/or second fixing means comprise the said respective first (48) or second (52) end of the sheath (46) fixed to the support (22) and/or to the plate (24) by welding.

6. Assembly as claimed in any one of Claims 1 to 5, **characterised in that** the assembly has resilient zones (46; 110) for damping the stress on the plate (24) during the deployment of the airbag (28).

7. Assembly as claimed in any one of Claims 1 to 6, **characterised in that** the sheath (46) has a substantially constant cross-section in the deployed state.

8. Assembly as claimed in any one of Claims 1 to 7, **characterised in that** it comprises supplementary shock-absorbing means (100) adapted to damp a second impact of the passenger on the airbag (28).

9. Assembly as claimed in any one of Claims 1 to 8, **characterised in that** it further comprises supplementary means for retaining and guiding the force distribution plate during the deployment of the airbag (28), and that these means comprise reinforced parts of the sheath, in particular parts produced in one piece therewith, these parts extending from the said first end (48) to the said second end (52) and being fixed on the one hand to the plate (24) and on the other hand to the support (22).

10. Assembly as claimed in any one of Claims 1 to 9, **characterised in that** the support is a lining (22) of a door (10) intended to be articulated on an item of motor vehicle equipment, and the plate (24) is at least a part of the visible surface of the door (10).

11. Assembly as claimed in any one of the preceding claims, **characterised in that** it comprises means for adjusting the inclination of the force distribution plate (24), and that these adjustment means are formed by the sheath (46) which is cut out from a tubular part with an inclination for the cut.
